(19) **Europäisches Patentamt**
European Patent Office
Office européen des brevets

(11) **EP 4 251 488 B1**

(12) **EUROPÄISCHE PATENTSCHRIFT**

(45) Veröffentlichungstag und Bekanntmachung des Hinweises auf die Patenterteilung:
**26.03.2025   Patentblatt 2025/13**

(21) Anmeldenummer: **21810955.1**

(22) Anmeldetag: **09.11.2021**

(51) Internationale Patentklassifikation (IPC):
***B60W 30/18*** *(2012.01)*

(52) Gemeinsame Patentklassifikation (CPC):
**B60W 30/18145;** B60W 2050/0026; B60W 2510/20; B60W 2552/30; B60W 2554/4042; B60W 2554/4043; B60W 2556/05; B60W 2556/45; B60W 2720/10

(86) Internationale Anmeldenummer:
**PCT/EP2021/081160**

(87) Internationale Veröffentlichungsnummer:
**WO 2022/111992 (02.06.2022 Gazette 2022/22)**

(54) **OPTIMIERUNG FÜR EIN QUERFÜHRENDES ASSISTENZSYSTEM**

OPTIMIZATION FOR A LATERAL GUIDANCE ASSISTANCE SYSTEM

OPTIMISATION D'UN SYSTÈME D'ASSISTANCE AU GUIDAGE LATÉRAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2020   DE 102020215058**

(43) Veröffentlichungstag der Anmeldung:
**04.10.2023   Patentblatt 2023/40**

(73) Patentinhaber: **VOLKSWAGEN AKTIENGESELLSCHAFT**
**38440 Wolfsburg (DE)**

(72) Erfinder:
• MÜNNING, Daniel
**38124 Braunschweig (DE)**
• ACKERT, Lukas
**38373 Frellstedt (DE)**

(56) Entgegenhaltungen:
EP-A1- 3 360 744        DE-A1- 102005 035 624
DE-A1- 102008 008 172   DE-A1- 102010 054 077
DE-A1- 102012 009 238   FR-A1- 3 046 768

**Beschreibung**

Die Erfindung betrifft eine Setz-Einheit zum Bestimmen einer Sollgeschwindigkeit für ein querführendes Assistenzsystem eines zumindest teilweise assistiert fahrenden Kraftfahrzeugs, ein Kraftfahrzeug, ein System, ein Verfahren sowie ein entsprechendes Computer-Programm.

Mittlerweile müssen querführende Fahrerassistenzsysteme, wie beispielsweise der Travel Assist, zugelassen werden. Querführende Assistenzsysteme können ein Kraftfahrzeug quergeführt durch zum Beispiel eine Kurve steuern. Beispielsweise gilt für querführende Fahrerassistenzsysteme das Regelwerk der UN ECE R79. Dort ist unter anderem eine maximale Querbeschleunigung benannt, die ein Kraftfahrzeug nicht überschreiten darf. Bei realen Fahrversuchen hat sich gezeigt, dass verschiedene Faktoren die Querbeschleunigung beeinflussen können. Während der aktiven Regelung entsteht beim Durchfahren einer Kurve eine Querbeschleunigung, die auf das Kraftfahrzeug wirkt. Die Querbeschleunigung a ist unter anderem abhängig von der Geschwindigkeit v des Kraftfahrzeugs sowie dem Kurvenradius R und kann mit der Formel:

$a$=$v$^2/$R$, also $$a = \frac{v^2}{R}$$, beschrieben werden. Aufgrund regulatorischer Anforderungen ist die erlaubte Querbeschleunigung limitiert, das heißt, bei höheren Kurvengeschwindigkeiten würde bei konstantem Radius das Limit, also der Grenzwert, der Querbeschleunigung überschritten und die querführende Funktion muss sicherstellen, dass die Querbeschleunigung nicht überschritten wird.

Die Offenlegungsschrift EP 3 360 744 A1 betrifft ein Verfahren zum Betreiben eines Fahrzeugs, insbesondere eines Nutzfahrzeugs, wobei das Fahrzeug eine Fahrtinformation-Ermittlungseinrichtung aufweist, mittels der zumindest die aktuelle Position, insbesondere zusammen mit der aktuell eingestellten Fahrroute, des fahrenden Fahrzeugs als aktuelle Fahrtinformation kontinuierlich ermittelt wird, wobei eine Fahrstrategie-Ermittlungseinrichtung vorgesehen ist, mittels der anhand der Fahrtinformationen und anhand von in einer Speichereinrichtung gespeicherten Kartendaten zunächst erfasst wird, ob sich in Fahrtrichtung vor dem Fahrzeug eine, insbesondere einen definierten Kurvenverlauf aufweisende, Kurve befindet, wobei, sofern mittels der Fahrstrategie-Ermittlungseinrichtung eine Kurve erfasst wird, mittels der Fahrstrategie-Ermittlungseinrichtung anhand von gespeicherten und/oder ermittelten Kurveninformationen sowie anhand von Fahrzeuginformationen eine optimale, insbesondere eine energieverbrauchsoptimale, Fahrstrategie zum Durchfahren der Kurve ermittelt wird.

Die Offenlegungsschrift DE 10 2010 054 077 A1 betrifft ein Verfahren und eine Vorrichtung zum Bereitstellen einer Fahrempfehlung, insbesondere an einen Fahrer eines Kraftfahrzeugs oder zum automatischen Betreiben des Kraftfahrzeugs. Das Verfahren umfasst die folgenden Schritte: - Abrufen einer Menge von Geschwindigkeitsprofilen für einen dem Kraftfahrzeug voraus liegenden Streckenabschnitt, wobei jedes Geschwindigkeitsprofil einen Verlauf der Geschwindigkeit des Kraftfahrzeugs entlang des Streckenabschnitts angibt; - Ermitteln eines wahrscheinlichsten Geschwindigkeitsprofils für den Streckenabschnitt aus der Menge der Geschwindigkeitsprofile; - Bestimmen eines gemäß einem vorgegebenen Optimierungsparameter optimierten Geschwindigkeitsprofils abhängig von dem wahrscheinlichsten Geschwindigkeitsprofil; und - Signalisieren einer Fahrempfehlung abhängig von dem optimierten Geschwindigkeitsprofil und abhängig von der momentanen Position des Kraftfahrzeugs.

Der Erfindung liegt nun die Aufgabe zugrunde, eine Möglichkeit zu schaffen, zuverlässig eine Kurvengeschwindigkeit für ein querführendes Assistenzsystem zu bestimmen, bei der eine maximale erlaubte Querbeschleunigung nicht überschritten wird. Insbesondere soll eine robuste, variable und lernfähige Möglichkeit zur Geschwindigkeitsbestimmung geschaffen werden, wobei vorzugsweise nahe an der maximal erlaubten Geschwindigkeit geregelt werden soll.

Gelöst wird die obige Aufgabe durch eine Setz-Einheit zum Bestimmen einer Sollgeschwindigkeit für ein querführendes Assistenzsystem eines zumindest teilweise assistiert fahrenden Kraftfahrzeugs gemäß Anspruch 1 mit zumindest:

- einer Eingangsschnittstelle zum Empfangen von Eingangsdaten umfassend Typendaten mit Informationen zu einem Fahrzeugtyp des Kraftfahrzeugs und Schwarmdaten mit Informationen zu einer Kurve vor dem Kraftfahrzeug;
- einer Analyseeinheit zum Bestimmen einer Kurvengeschwindigkeit basierend auf den Eingangsdaten;
- einer Ausgangsschnittstelle zum Übermitteln von Informationen bezüglich der Kurvengeschwindigkeit an das querführende Assistenzsystem, wobei

  die Eingangsdaten Schwarmdaten aus einem Schwarmdaten-Pool umfassen mit Informationen eines Sensors eines Schwarm-Kraftfahrzeugs und Informationen über den Fahrzeugtyp des Schwarm-Kraftfahrzeugs und die Analyseeinheit dazu ausgebildet ist, eine Kurvengeschwindigkeit zu bestimmen, bei der die maximale Querbeschleunigung in einer vordefinierten Zeitspanne kleiner ist als ein vordefinierter Schwellenwert.

Die obige Aufgabe wird ferner gelöst von einem Kraftfahrzeug mit:

- einer Setz-Einheit wie zuvor definiert;
- einem querführenden Assistenzsystem;
- einem Sensor zum Erfassen von Sensordaten mit Informationen bezüglich einer Querbeschleunigung des Kraftfahrzeugs; und
- vorzugsweise einem Speicher zum Bevorraten von Typendaten mit Informationen zu einem Fahrzeugtyp des Kraftfahrzeugs.

Die obige Aufgabe wird zudem gelöst von einem System zum Bestimmen einer Sollgeschwindigkeit für ein zumindest teilweise assistiert fahrendes Kraftfahrzeug mit:

einem Kraftfahrzeug, wie zuvor definiert, und einem Schwarmdaten-Pool umfassend Schwarmdaten mit Informationen wenigstens eines Sensors wenigstens eines Schwarm-Kraftfahrzeugs und Informationen über einen Fahrzeugtyp des wenigstens einen Schwarm-Kraftfahrzeugs, wobei das System dazu ausgebildet ist, Schwarmdaten mit dem Schwarmdaten-Pool auszutauschen.

Weiterhin wird die obige Aufgabe gelöst durch ein Verfahren zum Bestimmen einer Sollgeschwindigkeit für ein querführendes Assistenzsystem eines zumindest teilweise assistiert fahrenden Kraftfahrzeugs nach Anspruch 8 umfassend zumindest die Schritte:

- Empfangen von Eingangsdaten umfassend Typendaten mit Informationen zu einem Fahrzeugtyp des Kraftfahrzeugs und Schwarmdaten mit Informationen zu einer Kurve vor dem Kraftfahrzeug;
- Bestimmen einer Kurvengeschwindigkeit basierend auf den Eingangsdaten;
- Übermitteln von Informationen bezüglich der Kurvengeschwindigkeit an das querführende Assistenzsystem, wobei die Eingangsdaten Schwarmdaten aus einem Schwarmdaten-Pool mit Informationen eines Sensors eines Schwarm-Kraftfahrzeugs und Informationen über den Fahrzeugtyp des Schwarm-Kraftfahrzeugs umfassen und eine Kurvengeschwindigkeit bestimmt wird, bei der die maximale Querbeschleunigung in einer vordefinierten Zeitspanne kleiner ist als ein vordefinierter Schwellenwert.

Schließlich wird die obige Aufgabe zudem gelöst von einem Computer-Programm mit Programm-Code-Mitteln, um alle Schritte eines Verfahrens wie zuvor definiert durchzuführen, wenn das Computer-Programm auf einem Computer oder einer entsprechenden Recheneinheit ausgeführt wird.

Durch eine Verwendung von Schwarmdaten kann zuverlässig und sicher bestimmt werden, welche Geschwindigkeiten in der Kurve sicher gefahren wurden. Hieraus lässt sich technisch einfach eine Kurvengeschwindigkeit bestimmen, die gefahren werden kann. Vorzugsweise umfassen die Schwarmdaten daher Informationen bezüglich einer Querbeschleunigung in der Kurve, einer Geschwindigkeit in und vor der Kurve und/oder Informationen über den Fahrzeugtyp des Schwarm-Kraftfahrzeugs. Hierdurch kann mittels der Schwarmdaten eine maximale Kurvengeschwindigkeit bestimmt werden, bei der die Querbeschleunigungs-Grenzwerte eingehalten werden. Vorzugsweise kann die Geschwindigkeit bereits vor der Kurve eingeregelt werden. Insbesondere ist es denkbar, dass der vordefinierte Schwellenwert mit einer gewissen Toleranz für eine gewisse Zeit, zum Beispiel 2 Sekunden um

$$0{,}3 \text{ m/s\^{}2 } \left(\tfrac{m}{s^2}\right)$$

, überschritten werden darf. Insoweit ist die maximale Querbeschleunigung in einer vordefinierten Zeitspanne kleiner als der vordefinierte Schwellenwert.

Erfindungsgemäß ist bei der Setz-Einheit und dem Verfahren vorgesehen, dass die Schwarmdaten Informationen bezüglich einer Querbeschleunigung des Schwarm-Kraftfahrzeugs, eines Beladungszustands des Schwarm-Kraftfahrzeugs, eines Reifendrucks des Schwarm-Kraftfahrzeugs, eines Lenkungstyps des Schwarm-Kraftfahrzeugs und/oder darüber, ob eine Querführung des Schwarm-Kraftfahrzeugs aktiv war, umfassen. Hierdurch kann ein verbessertes Bestimmen der Sollgeschwindigkeit erfolgen. Insbesondere kann hierdurch eine zu langsame Kurvenfahrt verhindert werden. Die Setz-Einheit kann eine Auswahl an Schwarmdaten basierend auf dem eigenen Kraftfahrzeug bestimmen. Beispielsweise kann, wenn das eigene Kraftfahrzeug einen Kleinwagen umfasst, eine Auswahl auf Schwarmdaten von Schwarm-Kraftfahrzeugen vom Fahrzeugtyp Kleinwagen erfolgen. Insbesondere kann der Lenkungstyp aber eine Fahrwerkskombination umfassen, so dass nur Schwarmdaten von Kraftfahrzeugen mit vergleichbaren Fahrwerkskombinationen ausgewählt werden.

In weiterer bevorzugter Ausgestaltung der Erfindung ist vorgesehen, dass die Eingangsschnittstelle zum Empfangen von Eingangsdaten umfassend Sensordaten mit Informationen zu einem Zustand des Kraftfahrzeugs ausgebildet ist, wobei die Analyseeinheit dazu ausgebildet ist, basierend auf den Sensordaten und den Schwarmdaten die Kurvengeschwindigkeit zu bestimmen. Hierdurch kann ein Bestimmen der Sollgeschwindigkeit weiter verbessert werden. Die Setz-Einheit kann eine Auswahl an Schwarmdaten basierend auf einem Zustand des eigenen Kraftfahrzeugs bestimmen. Hierdurch ist eine genauere und feinere Bestimmung der Sollgeschwindigkeit möglich.

In weiterer bevorzugter Ausgestaltung der Erfindung ist vorgesehen, dass die Typendaten Informationen bezüglich eines Lenkungstyps des Kraftfahrzeugs umfassen. Durch die Erfassung eines Lenkungstyps des eigenen Kraftfahrzeugs kann zuverlässig eine zulässige Sollgeschwindigkeit bestimmt werden. Insbesondere kann hierdurch technisch einfach eine sehr feine Bestimmung der Sollgeschwindigkeit erfolgen, die insbesondere sehr nahe am erlaubten Höchstwert ist. Es kann eine einfache, schnelle und robuste Möglichkeit zur Bestimmung der Sollgeschwindigkeit geschaffen werden.

In weiterer bevorzugter Ausgestaltung der Erfindung ist vorgesehen, dass die Analyseeinheit dazu ausgebildet ist, basierend auf den Sensordaten, den Typendaten und/oder den Schwarmdaten ein Kennfeld und/oder ein empirisches Modell bezüglich der Kurvengeschwindigkeit zu ermitteln und basierend auf dem Kennfeld und/oder dem empirischen Modell die Kurvengeschwindigkeit zu bestimmen. Es versteht sich, dass die Schwarmdaten auch ein oder mehrere Kennfelder umfassen können. Das Ermitteln des Kennfelds und/oder empirischen Modells kann also auch durch ein Empfangen des Kennfelds und/oder empirischen Modells, insbesondere eines Fahrzeugtyp- oder Lenkungstypspezifischen Kennfelds und/oder empirischen Modells, aus den Schwarmdaten erfolgen. Das Kennfeld stellt eine hochverdichtete Informationsquelle dar, aus der in kurzer Zeit technisch einfach und insbesondere rechenleistungseffizient eine Sollgeschwindigkeit bestimmbar ist. Ein empirisches Modell stellt eine vereinfachte, auf einer Vielzahl von Daten basierende Informationsquelle dar. Es kann eine schnelle, effiziente und robuste Möglichkeit zur Sollgeschwindigkeitsbestimmung geschaffen werden, die insbesondere mit jeder Durchfahrt eines Schwarm-Kraftfahrzeugs durch die Kurve verbessert wird.

In weiterer bevorzugter Ausgestaltung der Erfindung ist vorgesehen, dass die Setz-Einheit zum Übermitteln von Sensordaten und/oder Typendaten des Kraftfahrzeugs in den Schwarmdaten-Pool ausgebildet ist. Hierdurch kann ein ständig wachsender Schwarmdaten-Pool geschaffen werden. Die Bestimmung der Sollgeschwindigkeit kann stetig verfeinert werden. Zudem können hierdurch sich ändernde Fahrbahneigenschaften berücksichtigt werden. Beispielsweise kann ein geringes Absenken der Fahrbahn zu anderen fahrbaren Kurvengeschwindigkeiten führen. Die Schwarmdaten im Schwarmdaten-Pool können also vorzugsweise stetig aktuell gehalten werden. Ferner kann ein Kraftfahrzeug mit modifiziertem Lenkungstyp, beispielsweise wenn ein Sportfahrwerk nachgerüstet wurde, ohne vorheriges Einlernen sicher quergeführt werden, da vorzugsweise entsprechende Schwarmdaten zur Querführung verwendet werden können.

Weitere bevorzugte Ausgestaltungen der Erfindung ergeben sich aus den übrigen, in den Unteransprüchen genannten Merkmalen.

Die verschiedenen, in dieser Anmeldung genannten Ausführungsformen der Erfindung sind, sofern im Einzelfall nicht anders ausgeführt, mit Vorteil miteinander kombinierbar.

Fahrassistenzsysteme zur Querführung des Kraftfahrzeugs sind insbesondere Systeme zur aktiven Spurführung beziehungsweise zur aktiven Spurmittenführung. Bei diesen Systemen wird über einen Sensor, häufig eine Kamera, der Straßenverlauf aufgenommen und es erfolgt ein Fahreingriff zur Querführung des Fahrzeugs. Die Systeme sind in der Regel derart ausgelegt, dass der Fahrer weiterhin seine Hände am Lenkrad haben muss. Führt der Fahrer einen starken Lenkeingriff durch, so soll die automatische Querführung deaktiviert werden. Mit diesen Fahrerassistenzsystemen ist es möglich, dass ein kontrolliertes Fahren in einer Spur, insbesondere in Verbindung mit einem längsführenden Fahrerassistenzsystem, für den Fahrer besonders einfach und angenehm ist, aber dennoch weiterhin leichte Lenkeingriffe durch den Fahrer möglich sind. Der Einsatz solcher Fahrerassistenzsysteme erlaubt es zudem, Voraussagen für die zukünftige Trajektorie des Kraftfahrzeugs zu treffen und diese in weiteren Fahrzeugsystemen zu nutzen.

Eine Kennlinie oder ein Kennfeld ist eine Darstellung eines Zusammenhangs zwischen zwei oder mehr physikalischen Größen. Dabei ist der Zusammenhang für ein Bauteil, eine Baugruppe und/oder ein Gerät kennzeichnend. Der Zusammenhang wird als Linie in einem ebenen Koordinatensystem angegeben. Die Kennlinie dient zur Veranschaulichung des Zusammenhangs aber auch zu dessen quantitativer Wiedergabe, wenn eine algebraische Funktion des Zusammenhangs nicht bekannt ist. Während eine Kennlinie direkt aus Messwerten gewonnen werden kann, kann eine theoretisch nicht untermauerte, gleichwohl näherungsweise richtige Funktion zum Beispiel aus Messwerten durch Interpolation und Regression ermittelt werden.

Die Erfindung wird nachfolgend in Ausführungsbeispielen anhand der zugehörigen Zeichnungen erläutert. Es zeigen:

Figur 1   eine schematische Darstellung einer erfindungsgemäßen Setz-Einheit;

Figur 2   eine schematische Darstellung einer Setz-Einheit, eines Schwarmdaten-Pools und eines querführenden Fahrerassistenzsystems;

Figur 3   eine schematische Darstellung eines erfindungsgemäßen Systems umfassend ein Kraftfahrzeug und einen Schwarmdaten-Pool;

Figur 4   eine schematische Darstellung einer Kurvenfahrt;

Figur 5   eine schematische Darstellung einer weiteren Kurvenfahrt;

Figur 6   eine schematische Darstellung einer Bestimmung eines Kennfeldes und

Figur 7   schematisch die Schritte eines erfindungsgemäßen Verfahrens.

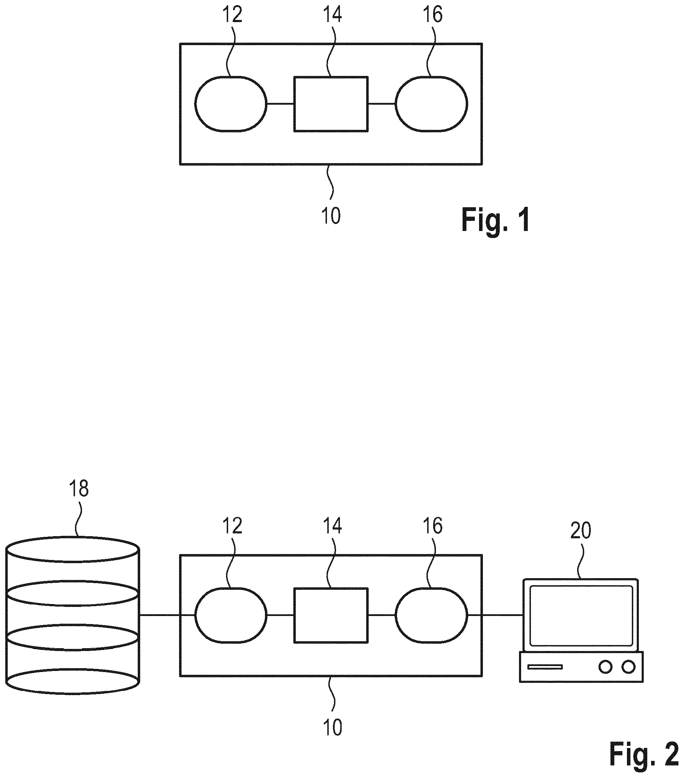

Figur 1 zeigt eine schematische Darstellung einer Setz-Einheit 10 für ein nicht gezeigtes querführendes Fahrerassistenzsystem eines Kraftfahrzeugs. Die Setz-Einheit 10 umfasst eine Eingangsschnittstelle 12, eine Analyseeinheit 14 und eine Ausgangsschnittstelle 16.

Die Eingangsschnittstelle 12 ist zum Empfangen von Eingangsdaten umfassend Typendaten mit Informationen zu einem Fahrzeugtyp des Kraftfahrzeugs und Schwarmdaten mit Informationen zu einer Kurve vor dem Kraftfahrzeug ausgebildet. Die Eingangsdaten können dabei Schwarmdaten aus einem Schwarmdaten-Pool mit Informationen eines Sensors eines Schwarm-Kraftfahrzeugs und Informationen über den Fahrzeugtyp des Schwarm-Kraftfahrzeugs und/oder Sensordaten von einem oder mehreren Sensoren des Kraftfahrzeugs umfassen.

Die Analyseeinheit 14 ist dazu ausgebildet, die Eingangsdaten zu analysieren und basierend auf den Eingangsdaten eine Kurvengeschwindigkeit für das Kraftfahrzeug zu bestimmen, bei der die maximale Querbeschleunigung in einer vordefinierten Zeitspanne kleiner ist als ein vordefinierter Schwellenwert. Der vordefinierte Schwellenwert ist vorzugsweise in der ECE-Regelung UN ECE R79 festgelegt und beträgt beispielsweise

$2,7 \text{ m/s}^2 \left(\frac{m}{s^2}\right)$

. Dabei ermittelt die Analyseeinheit 14, ab welcher Geschwindigkeit ein Schwarm-Kraftfahrzeug die erlaubte Querbeschleunigung überschritten hat. Hierzu kann insbesondere ein Vergleich des Kraftfahrzeugzustands, umfassend bevorzugt ein Fahrzeugtyp und/oder ein Lenkungstyp, des eigenen Kraftfahrzeugs mit den Schwarmdaten erfolgen.

Die Ausgangsschnittstelle 16 ist dazu ausgebildet, Informationen bezüglich der Kurvengeschwindigkeit an das querführende Assistenzsystem zu übermitteln. Dabei kann das querführende Assistenzsystem die Informationen bezüglich der Kurvengeschwindigkeit empfangen und das Kraftfahrzeug entsprechend der Kurvengeschwindigkeit steuern und/oder regeln.

Es versteht sich, dass die Eingangsschnittstelle 12 und die Ausgangsschnittstelle 16 zu einer einzigen Schnittstelle kombinierbar sind. Es versteht sich ferner, dass die Schnittstellen 12, 16 sowohl drahtlos als auch kabelgebunden ausgebildet sein können. Insbesondere können die Schnittstellen 12, 16 auch als Softwareschnittstellen ausgebildet sein.

Figur 2 zeigt schematisch eine Setz-Einheit 10, einen Schwarmdaten-Pool 18 und ein querführendes Assistenzsystem 20. Gleiche Bezugszeichen beziehen sich auf gleiche Merkmale und werden nicht erneut erläutert.

Der Schwarmdaten-Pool 18 umfasst eine Vielzahl von Schwarmdaten mit Informationen wenigstens eines Sensors eines Schwarm-Kraftfahrzeugs, eines Fahrzeugtyps eines Schwarm-Kraftfahrzeugs und/oder eines Lenkungstyps eines Schwarm-Kraftfahrzeugs. Insbesondere können die Schwarmdaten Information umfassen, ob eine Querführung aktiv war, Informationen bezüglich einer gemessenen Querbeschleunigung, eines Beladungszustands, einer Geschwindigkeit und/oder nes Reifendrucks.

Die Setz-Einheit 10 ermittelt eine Sollgeschwindigkeit, also eine Kurvengeschwindigkeit, bei der die maximal erlaubte Querbeschleunigung nicht überschritten wird. Anschließend werden Informationen bezüglich der Kurvengeschwindigkeit an das querführende Assistenzsystem 20 übermittelt. Das querführende Assistenzsystem 20 regelt und/oder steuert das eigene Kraftfahrzeug basierend auf den Informationen bezüglich der Kurvengeschwindigkeit.

Es versteht sich, dass die Setz-Einheit 10 Teil eines Bordcomputers, eines Navigationssystems und/oder besonders bevorzugt des querführenden Assistenzsystems 20 sein kann. Hierdurch können die Kosten sowie die Bauraumanforderungen gering gehalten werden.

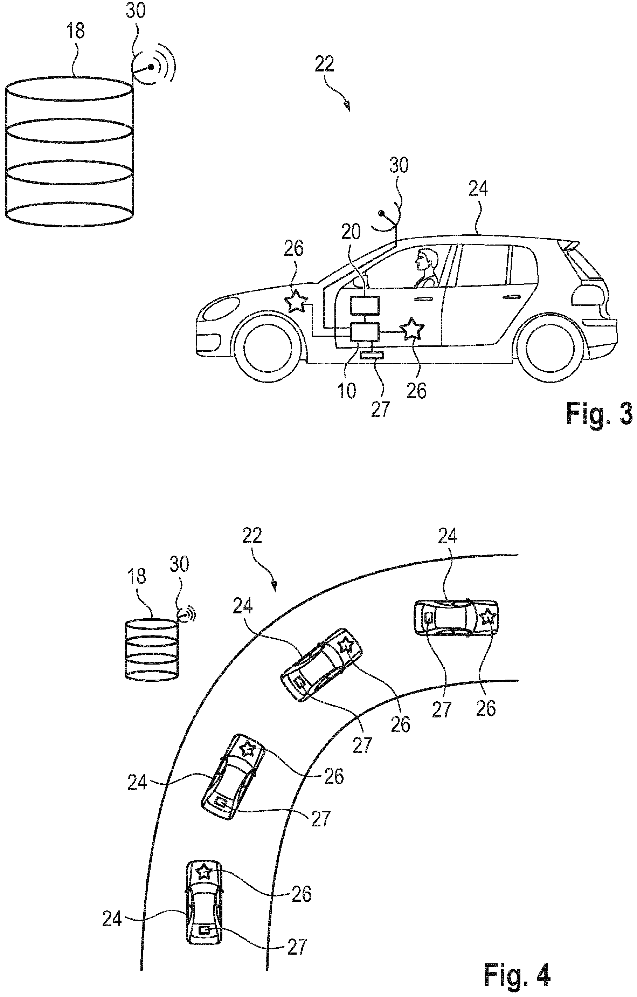

In Figur 3 ist ein erfindungsgemäßes System 22 mit einem Kraftfahrzeug 24 und einem Schwarmdaten-Pool 18 gezeigt. Das Kraftfahrzeug 24 weist ein querführendes Assistenzsystem 20 und eine Setz-Einheit 10 auf. Ferner sind an dem Kraftfahrzeug 24 Sensoren 26 angeordnet.

Die Setz-Einheit 10 kann Sensordaten der Sensoren 26 empfangen und analysieren. Ferner kann die Setz-Einheit 10 mittels einer Kommunikationsschnittstelle 30 des Kraftfahrzeugs 24 mit dem Schwarmdaten-Pool 18 Schwarmdaten austauschen.

Einerseits kann die Setz-Einheit 10 Daten aus dem Schwarmdaten-Pool 18 empfangen. Mittels der empfangenen Schwarmdaten kann dann eine Bestimmung der Sollgeschwindigkeit, wie bereits oben beschrieben, erfolgen. Insbesondere kann die Setz-Einheit 10 Sensordaten der Sensoren 26 und/oder Typendaten mit Informationen zu einem Fahrzeugtyp des Kraftfahrzeugs 24 aus einem Speicher 27 empfangen und die Sollgeschwindigkeit basierend auf den empfangenen Sensordaten, Typendaten und/oder den Schwarmdaten bestimmen. Dabei kann vorzugsweise ein Vergleich des Fahrzeugzustands des Kraftfahrzeugs 24, insbesondere in Bezug auf Fahrzeugtyp und Lenkungstyp, mit den Schwarmdaten erfolgen.

Andererseits kann die Setz-Einheit 10 Daten an den Schwarmdaten-Pool 18 senden. Das Kraftfahrzeug 24 wirkt insofern als Schwarm-Kraftfahrzeug. Die Sensoren 26 können beispielsweise wenigstens einen der folgenden Sensortypen umfassen: einen Querbeschleunigungssensor, einen Reifendrucksensor, einen Beladungssensor und/oder einen Statussensor, der erfasst, ob das querführende Assistenzsystem 20 aktiv ist. Die Schwarmdaten, die an den Schwarmdaten-Pool 18 übermittelt werden, sind dabei vorzugsweise die Sensordaten und/oder Typendaten mit Informationen zu einem Fahrzeugtyp des Kraftfahrzeugs 24 aus dem Speicher 27. Es versteht sich, dass weitere Daten bezüglich einer Position, Geschwindigkeit, Beschleunigung et cetera des Kraftfahrzeugs 24 übermittelt werden können.

In Figur 4 ist schematisch ein erfindungsgemäßes System 22 gezeigt, wobei ein Kraftfahrzeug 24 des erfindungsgemäßen Systems 22 eine Kurvenfahrt ausführt. In der in Figur 4 gezeigten Situation empfängt das Kraftfahrzeug 24 vom Schwarmdaten-Pool 18 vor und/oder während der Kurvenfahrt Schwarmdaten. Die Setz-Einheit 10 bestimmt basierend auf den Schwarmdaten und Sensordaten des Sensors 26 die Kurvengeschwindigkeit.

Vorzugsweise empfängt das Kraftfahrzeug 24 beziehungsweise die Setz-Einheit 10, die aus Gründen der Übersicht nicht näher gezeigt ist, die Schwarmdaten vor Durchführung der Kurvenfahrt und bestimmt die Sollgeschwindigkeit, also die maximale Kurvengeschwindigkeit, bereits vor Einfahrt in die Kurve.

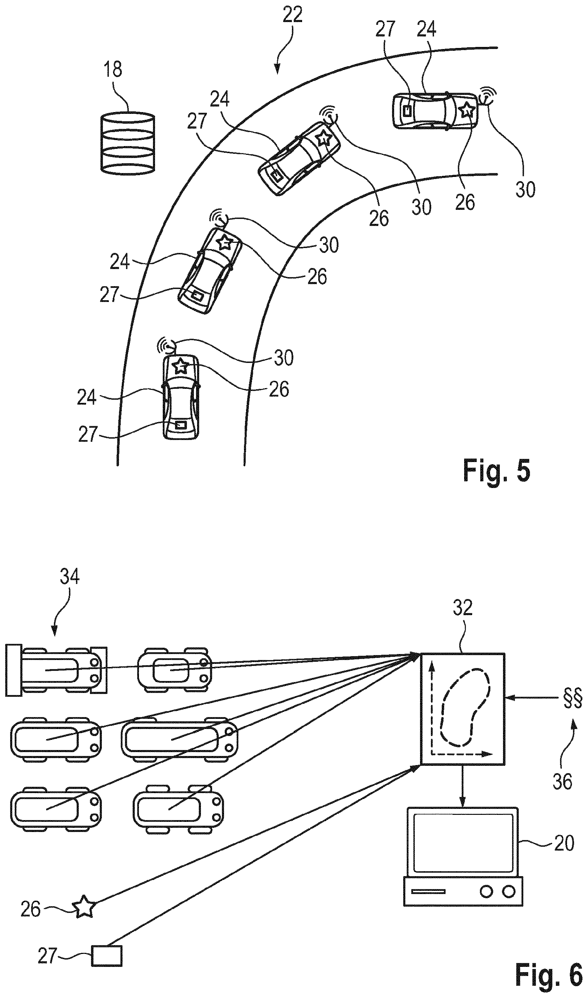

In Figur 5 ist schematisch ein erfindungsgemäßes System 22 gezeigt, wobei ein Kraftfahrzeug 24 des erfindungsgemäßen Systems 22 eine Kurvenfahrt ausführt. In der in Figur 5 gezeigten Situation sendet das Kraftfahrzeug 24 Daten zum Schwarmdaten-Pool 18 vor, während und/oder nach der Kurvenfahrt. Beispielsweise umfassen die Daten, die an den Schwarmdaten-Pool 18 gesendet werden, Sensordaten des Sensors 26 und/oder Typendaten mit Informationen zu einem Fahrzeugtyp des Kraftfahrzeugs 24 aus dem Speicher 27. Der Sensor 26 kann einen oder mehrere der oben genannten Sensoren 26 umfassen.

Der Schwarmdaten-Pool 18 ist dazu ausgebildet, Schwarmdaten zu speichern, zu übermitteln, zu analysieren, zu kombinieren und/oder zu verwerfen. Der Schwarmdaten-Pool 18 kann eine Computer-Cloud, ein Server, ein Rechenzentrum und/oder eine andere prinzipiell im Stand der Technik bekannte Vorrichtung sein, die sich zum Durchführen der oben genannten Anforderungen an einen Schwarmdaten-Pool 18 eignet.

Die in Figur 4 und in Figur 5 gezeigten Situationen können auch parallel ablaufen. Es ist also besonders bevorzugt, dass sowohl Daten vom Schwarmdaten-Pool 18 empfangen als auch Daten zum Schwarmdaten-Pool 18 übertragen werden.

In Figur 6 ist schematisch die Bestimmung eines Kennfelds 32 aus Daten eines Schwarms 34 von Kraftfahrzeugen 24, einer Anforderung 36, Sensordaten von Sensoren 26 und Typendaten aus dem Speicher 27 dargestellt. Aus dem Kennfeld 32 wird eine Sollgeschwindigkeit bestimmt. Die Sollgeschwindigkeit ist die Geschwindigkeit, bei der eine Durchfahrt durch eine Kurve möglich ist, ohne dabei einen Höchstwert für die Querbeschleunigung zu erreichen. Der Höchstwert für die Querbeschleunigung ist vorzugsweise in der Anforderung 36 definiert. Bei der Anforderung 36 kann es sich insbesondere um eine ECE-Regel oder eine andere regulatorische Vorschrift handeln.

Der Schwarm 34 aus Kraftfahrzeugen 24 weist vorzugsweise viele verschiedene Fahrzeugtypen auf. In der Figur 6 sind verschiedene Fahrzeugtypen, Lenkungstypen und Zustände von Kraftfahrzeugen 24 beispielhaft dargestellt. Ein Front- und Heckspoiler weist auf ein Kraftfahrzeug 24 vom Fahrzeugtyp Sportwagen hin. Kürzer, also mit geringerer Länge, dargestellt ist ein Fahrzeug vom Fahrzeugtyp Kleinfahrzeug. Das längste dargestellte Kraftfahrzeug 24 umfasst beispielsweise einen Bus. Ferner sind in der unteren Reihe verschiedene Lenkungstypen der Kraftfahrzeuge 24 schematisch durch verschiedene Größen der Fahrzeugräder dargestellt. Breitere Reifen verdeutlichen, dass das Kraftfahrzeug 24 einen Lenkungstyp in Form eines Sportfahrwerks aufweist. Dünnere breitere Reifen verdeutlichen, dass das Kraftfahrzeug 24 einen Lenkungstyp in Form eines Komfortfahrwerks aufweist. Es versteht sich, dass jeder Fahrzeugtyp und/oder Zustand mehrfach im Schwarmdaten-Pool 18 vorhanden sein kann. Insbesondere kann für jeden Fahrzeugtyp und/oder -zustand ein eigenes Kennfeld 32 bestimmt werden. Es versteht sich, dass verschiedene Eigenschaften der Kraftfahrzeuge 24 zu verschiedenen Kennfeldern 32 kombiniert werden können. Zudem kann anstatt eines Kennfelds 32 auch ein vereinfachtes empirisches Modell bestimmt werden.

Aus den Schwarmdaten, der Anforderung 36, den Typendaten und den Sensordaten des eigenen Kraftfahrzeugs 24 kann ein Kennfeld 32 bestimmt werden, das einen Bereich für eine Sollgeschwindigkeit angibt. Insbesondere können am Kennfeld 32 Lenkungstyp und/oder Fahrzeugtyp aufgetragen sein, wobei diese Bereiche derart definiert sein können, dass durch einen Lenkungstyp ein Bereich im Kennfeld 32 definiert wird und durch einen Fahrzeugtyp ein weiterer Bereich im Kennfeld 32 definiert wird und daraus ein Geschwindigkeitsbereich für die Sollgeschwindigkeit ermittelt wird. Liegt die Geschwindigkeit des eigenen Kraftfahrzeugs 24 im zuvor definierten Geschwindigkeitsbereich des Kennfelds 32 für die Sollgeschwindigkeit, wird die maximal erlaubte Querbeschleunigung nicht überschritten.

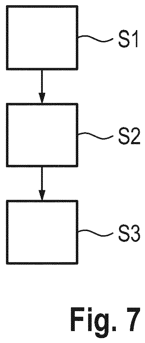

In Figur 7 sind schematisch die einzelnen Schritte eines erfindungsgemäßen Verfahrens zum Bestimmen einer Sollgeschwindigkeit für ein querführendes Assistenzsystem 20 eines zumindest teilweise assistiert fahrenden Kraftfahrzeugs 24 gezeigt. Ein erster Schritt S1 umfasst ein Empfangen von Eingangsdaten umfassend Typendaten mit Informationen zu einem Fahrzeugtyp des Kraftfahrzeugs 24 und Schwarmdaten mit Informationen zu einer Kurve vor dem Kraftfahrzeug 24. In einem zweiten Schritt S2 erfolgt ein Bestimmen einer Kurvengeschwindigkeit basierend auf den Eingangsdaten, bei der die maximale Querbeschleunigung in einer vordefinierten Zeitspanne kleiner ist als ein vordefinierter Schwellenwert. In einem dritten Schritt S3 werden Informationen bezüglich der Kurvengeschwindigkeit an das querführende Assistenzsystem 20 übermittelt. Die Eingangsdaten umfassen, wie bereits oben beschrieben, Schwarmdaten aus einem Schwarmdaten-Pool 18 mit Informationen eines Sensors 26 eines Schwarm-Kraftfahrzeugs 34 und Informationen über den Fahrzeugtyp des Schwarm-Kraftfahrzeugs 34.

**Bezugszeichenliste**

| 10 | Setz-Einheit |
|---|---|
| 12 | Eingangsschnittstelle |
| 14 | Analyseeinheit |
| 16 | Ausgangsschnittstelle |
| 18 | Schwarmdaten-Pool |
| 20 | querführendes Assistenzsystem |
| 22 | System |
| 24 | Kraftfahrzeug |
| 26 | Sensor |
| 27 | Speicher |
| 30 | Kommunikationsschnittstelle |
| 32 | Kennfeld |
| 34 | Schwarm / Schwarm-Kraftfahrzeug |
| 36 | Anforderung |
| S1 - S3 | Verfahrensschritte |

**Patentansprüche**

1. Setz-Einheit (10) zum Bestimmen einer Sollgeschwindigkeit für ein querführendes Assistenzsystem (20) eines zumindest teilweise assistiert fahrenden Kraftfahrzeugs (24) mit:

   - einer Eingangsschnittstelle (12) zum Empfangen von Eingangsdaten umfassend Typendaten mit Informationen zu einem Fahrzeugtyp des Kraftfahrzeugs (24) und Schwarmdaten mit Informationen zu einer Kurve vor dem Kraftfahrzeug (24);
   - einer Analyseeinheit (14) zum Bestimmen einer Kurvengeschwindigkeit basierend auf den Eingangsdaten;
   - einer Ausgangsschnittstelle (16) zum Übermitteln von Informationen bezüglich der Kurvengeschwindigkeit an das querführende Assistenzsystem (20),

   wobei die Eingangsdaten Schwarmdaten aus einem Schwarmdaten-Pool (18) umfassen mit Informationen eines Sensors (26) eines Schwarm-Kraftfahrzeugs (34) und Informationen über den Fahrzeugtyp des Schwarm-Kraftfahrzeugs (34) und die Analyseeinheit (14) dazu ausgebildet ist, eine Kurvengeschwindigkeit zu bestimmen, bei der die maximale Querbeschleunigung in einer vordefinierten Zeitspanne kleiner ist als ein vordefinierter Schwellenwert und wobei die Schwarmdaten Informationen bezüglich einer Querbeschleunigung des Schwarm-Kraftfahrzeugs (34) und/oder eines Beladungszustands des Schwarm-Kraftfahrzeugs (34) und/oder eines Reifendrucks des Schwarm-Kraftfahrzeugs (34) und/oder eines Lenkungstyps des Schwarm-Kraftfahrzeugs (34) und/oder darüber, ob eine Querführung des Schwarm-Kraftfahrzeugs (34) aktiv war, umfassen, wobei eine Auswahl an Schwarmdaten basierend auf dem eigenen Kraftfahrzeug durch die Setz-Einheit (10) bestimmbar ist.

2. Setz-Einheit (10) nach einem der vorstehenden Ansprüche, **dadurch gekennzeichnet, dass** die Eingangsschnittstelle (12) zum Empfangen von Eingangsdaten umfassend Sensordaten mit Informationen zu einem Zustand des Kraftfahrzeugs (24) ausgebildet ist, wobei die Analyseeinheit (14) dazu ausgebildet ist, basierend auf den Sensordaten und den Schwarmdaten die Kurvengeschwindigkeit zu bestimmen.

3. Setz-Einheit (10) nach Anspruch 2, **dadurch gekennzeichnet, dass** die Typendaten Informationen bezüglich eines Lenkungstyps des Kraftfahrzeugs (24) umfassen.

4. Setz-Einheit (10) nach einem der Ansprüche 2 oder 3, **dadurch gekennzeichnet, dass** die Analyseeinheit (14) dazu ausgebildet ist, basierend auf den Sensordaten, den Typendaten und/oder den Schwarmdaten ein Kennfeld (32) und/oder ein empirisches Modell bezüglich der Kurvengeschwindigkeit zu ermitteln und basierend auf dem Kennfeld (32) und/oder dem empirischen Modell die Kurvengeschwindigkeit zu bestimmen.

5. Setz-Einheit (10) nach einem der vorstehenden Ansprüche, **dadurch gekennzeichnet, dass** die Setz-Einheit (10) zum Übermitteln von Sensordaten und/oder Typendaten des Kraftfahrzeugs (24) in den Schwarmdaten-Pool (18) ausgebildet ist.

6. Kraftfahrzeug (24) mit:

   - einer Setz-Einheit (10) nach einem der vorstehenden Ansprüche;
   - einem querführenden Assistenzsystem (20);
   - einem Sensor (26) zum Erfassen von Sensordaten mit Informationen bezüglich einer Querbeschleunigung des Kraftfahrzeugs (24); und
   - vorzugsweise einem Speicher (27) zum Bevorraten von Typendaten mit Informationen zu einem Fahrzeugtyp des Kraftfahrzeugs (24).

7. System (22) zum Bestimmen einer Sollgeschwindigkeit für ein zumindest teilweise assistiert fahrendes Kraftfahrzeug (24) mit: einem Kraftfahrzeug (24) nach dem vorstehenden Anspruch und einem Schwarmdaten-Pool (18) umfassend Schwarmdaten mit Informationen wenigstens eines Sensors (26) wenigstens eines Schwarm-Kraftfahrzeugs (34) und Informationen über einen Fahrzeugtyp des wenigstens einen Schwarm-Kraftfahrzeugs (34), wobei das System (22) dazu ausgebildet ist, Schwarmdaten mit dem Schwarmdaten-Pool (18) auszutauschen.

8. Verfahren zum Bestimmen einer Sollgeschwindigkeit für ein querführendes Assistenzsystem (20) eines zumindest teilweise assistiert fahrenden Kraftfahrzeugs (24) umfassend die Schritte:

- Empfangen (S1) von Eingangsdaten umfassend Typendaten mit Informationen zu einem Fahrzeugtyp des Kraftfahrzeugs (24) und Schwarmdaten mit Informationen zu einer Kurve vor dem Kraftfahrzeug (24);
- Bestimmen (S2) einer Kurvengeschwindigkeit basierend auf den Eingangsdaten;
- Übermitteln (S3) von Informationen bezüglich der Kurvengeschwindigkeit an das querführende Assistenzsystem (20),
wobei die Eingangsdaten Schwarmdaten aus einem Schwarmdaten-Pool (18) mit Informationen eines Sensors (26) eines Schwarm-Kraftfahrzeugs (34) und Informationen über den Fahrzeugtyp des Schwarm-Kraftfahrzeugs (34) umfassen und eine Kurvengeschwindigkeit bestimmt wird, bei der die maximale Querbeschleunigung in einer vordefinierten Zeitspanne kleiner ist als ein vordefinierter Schwellenwert, und wobei die Schwarmdaten Informationen bezüglich einer Querbeschleunigung des Schwarm-Kraftfahrzeugs (34) und/oder eines Beladungszustands des Schwarm-Kraftfahrzeugs (34) und/oder eines Reifendrucks des Schwarm-Kraftfahrzeugs (34) und/oder eines Lenkungstyps des Schwarm-Kraftfahrzeugs (34) und/oder darüber, ob eine Querführung des Schwarm-Kraftfahrzeugs (34) aktiv war, umfassen, wobei eine Auswahl an Schwarmdaten basierend auf dem eigenen Kraftfahrzeug durch die Setz-Einheit (10) bestimmt wird.

9. Computer-Programm mit Programm-Code-Mitteln, um alle Schritte eines Verfahrens nach dem vorstehenden Anspruch 8 durchzuführen, wenn das Computer-Programm auf einem Computer oder einer entsprechenden Recheneinheit ausgeführt wird.

**Claims**

1. Setting unit (10) for determining a target speed for a lateral guidance assistance system (20) of a motor vehicle (24) which is driven in an at least partially assisted manner, comprising:

   - an input interface (12) for receiving input data comprising type data which contain information regarding a vehicle type of the motor vehicle (24), and swarm data which contain information regarding a curve in front of the motor vehicle (24);
   - an analysis unit (14) for determining a curve speed based on the input data;
   - an output interface (16) for transmitting information regarding the curve speed to the lateral guidance assistance system (20), wherein the input data comprise swarm data from a swarm data pool (18), containing information from a sensor (26) of a swarm motor vehicle (34), and information regarding the vehicle type of the swarm motor vehicle (34), and the analysis unit (14) is designed to determine a curve speed at which the maximum lateral acceleration in a predefined period of time is less than a predefined threshold value, and wherein the swarm data comprise information regarding a lateral acceleration of the swarm motor vehicle (34) and/or a load state of the swarm motor vehicle (34) and/or a tire pressure of the swarm motor vehicle (34) and/or a steering type of the swarm motor vehicle (34) and/or as to whether lateral guidance of the swarm motor vehicle (34) was active, wherein a selection of swarm data can be determined by the setting unit (10) based on the individual motor vehicle.

2. Setting unit (10) according to any of the preceding claims,
   **characterized in that** the input interface (12) is designed to receive input data comprising sensor data which contain information regarding a state of the motor vehicle (24), wherein the analysis unit (14) is designed to determine the curve speed based on the sensor data and the swarm data.

3. Setting unit (10) according to claim 2, **characterized in that** the type data comprise information regarding a steering type of the motor vehicle (24).

4. Setting unit (10) according to either claim 2 or claim 3,
   **characterized in that** the analysis unit (14) is designed to determine a characteristic map (32) and/or an empirical model regarding the curve speed based on the sensor data, the type data and/or the swarm data, and to determine the curve speed based on the characteristic map (32) and/or the empirical model.

5. Setting unit (10) according to any of the preceding claims,
   **characterized in that** the setting unit (10) is designed to transmit sensor data and/or type data of the motor vehicle (24) into the swarm data pool (18).

6. Motor vehicle (24) comprising:

   - a setting unit (10) according to any of the preceding claims;
   - a lateral guidance assistance system (20);
   - a sensor (26) for detecting sensor data which contain information regarding a lateral acceleration of the motor vehicle (24); and

- preferably a memory (27) for storing type data which contain information regarding a vehicle type of the motor vehicle (24).

7. System (22) for determining a target speed of a motor vehicle (24) which is driven in an at least partially assisted manner, comprising:
a motor vehicle (24) according to the preceding claim and a swarm data pool (18) comprising swarm data containing information from at least one sensor (26) of at least one swarm motor vehicle (34) and information regarding a vehicle type of the at least one swarm motor vehicle (34), wherein the system (22) is designed to exchange swarm data with the swarm data pool (18).

8. Method for determining a target speed for a lateral guidance assistance system (20) of a motor vehicle (24) which is driven in an at least partially assisted manner, comprising the steps of:

- receiving (S1) input data comprising type data which contain information regarding a vehicle type of the motor vehicle (24) and swarm data which contain information regarding a curve in front of the motor vehicle (24);
- determining (S2) a curve speed based on the input data;
- transmitting (S3) information regarding the curve speed to the lateral guidance assistance system (20),

wherein
the input data comprise swarm data from a swarm data pool (18), containing information from a sensor (26) of a swarm motor vehicle (34) and information regarding the vehicle type of the swarm motor vehicle (34), and a curve speed is determined, at which the maximum lateral acceleration in a predefined period of time is less than a predefined threshold value, and wherein the swarm data comprise information regarding a lateral acceleration of the swarm motor vehicle (34) and/or a load state of the swarm motor vehicle (34) and/or a tire pressure of the swarm motor vehicle (34) and/or a steering type of the swarm motor vehicle (34) and/or as to whether lateral guidance of the swarm motor vehicle (34) was active, wherein a selection of swarm data is determined by the setting unit (10) based on the individual motor vehicle.

9. Computer program having program code means for carrying out all steps of a method according to the preceding claim 8 when the computer program is executed on a computer or a corresponding computing unit.

**Revendications**

1. Unité de réglage (10) permettant de déterminer une vitesse de consigne pour un système d'assistance à guidage transversal (20) d'un véhicule automobile (24) à conduite au moins partiellement assistée, comportant :

- une interface d'entrée (12) permettant de recevoir des données d'entrée comprenant des données de type comportant des informations sur un type de véhicule du véhicule automobile (24) et des données en essaim comportant des informations sur un virage devant le véhicule automobile (24) ;
- une unité d'analyse (14) permettant de déterminer une vitesse de virage sur la base des données d'entrée ;
- une interface de sortie (16) permettant de transmettre des informations concernant la vitesse de virage au système d'assistance à guidage transversal (20), dans laquelle les données d'entrée comprennent des données en essaim provenant d'un groupe de données en essaim (18) comportant des informations d'un capteur (26) d'un véhicule automobile en essaim (34) et des informations sur le type de véhicule du véhicule automobile en essaim (34), et l'unité d'analyse (14) est configurée pour déterminer une vitesse de virage à laquelle l'accélération transversale maximale est inférieure à une valeur seuil prédéfinie dans un laps de temps prédéfini, et dans laquelle les données en essaim comprennent des informations concernant une accélération transversale du véhicule automobile en essaim (34) et/ou un état de charge du véhicule automobile en essaim (34) et/ou une pression de pneus du véhicule automobile en essaim (34) et/ou un type de direction du véhicule automobile en essaim (34) et/ou sur le fait de savoir si un guidage transversal du véhicule automobile en essaim (34) était actif ou non, dans laquelle une sélection de données en essaim peut être déterminée par l'unité de réglage (10) sur la base du véhicule automobile en lui-même.

2. Unité de réglage (10) selon l'une des revendications précédentes, **caractérisée en ce que** l'interface d'entrée (12) est configurée pour recevoir des données d'entrée comprenant des données de capteur comportant des informations sur un état du véhicule automobile (24), dans laquelle l'unité d'analyse (14) est configurée pour déterminer la vitesse de virage sur la base des données de capteur et des données en essaim.

3. Unité de réglage (10) selon la revendication 2, **ca-**

**ractérisée en ce que** les données de type comprennent des informations concernant un type de direction du véhicule automobile (24).

4. Unité de réglage (10) selon l'une des revendications 2 ou 3,
**caractérisée en ce que** l'unité d'analyse (14) est configurée pour définir, sur la base des données de capteur, des données de type et/ou des données en essaim, une cartographie (32) et/ou un modèle empirique concernant la vitesse de virage et pour déterminer la vitesse de virage sur la base de la cartographie (32) et/ou du modèle empirique.

5. Unité de réglage (10) selon l'une des revendications précédentes, **caractérisée en ce que** l'unité de réglage (10) est configurée pour transmettre des données de capteur et/ou des données de type du véhicule automobile (24) dans le groupe de données en essaim (18).

6. Véhicule automobile (24), comportant :

    - une unité de réglage (10) selon l'une des revendications précédentes ;
    - un système d'assistance à guidage transversal (20) ;
    - un capteur (26) pour la collecte de données de capteur comportant des informations concernant une accélération transversale du véhicule automobile (24) ; et
    - de préférence une mémoire (27) pour le stockage de données de type comportant des informations sur un type de véhicule du véhicule automobile (24).

7. Système (22) permettant de déterminer une vitesse de consigne pour un véhicule automobile (24) à conduite au moins partiellement assistée, comportant :

    un véhicule automobile (24) selon la revendication précédente et un groupe de données en essaim (18) comprenant des données en essaim comportant des informations d'au moins un capteur (26) d'au moins un véhicule automobile en essaim (34) et des informations sur un type de véhicule de l'au moins un véhicule automobile en essaim (34), dans lequel le système (22) est configuré pour échanger des données en essaim avec le groupe de données en essaim (18).

8. Procédé permettant de déterminer une vitesse de consigne pour un système d'assistance à guidage transversal (20) d'un véhicule automobile (24) à conduite au moins partiellement assistée, comprenant les étapes consistant à :

    - recevoir (S1) des données d'entrée comprenant des données de type comportant des informations sur un type de véhicule du véhicule automobile (24) et des données en essaim comportant des informations sur un virage devant le véhicule automobile (24) ;
    - déterminer (S2) une vitesse de virage sur la base des données d'entrée ;
    - transmettre (S3) des informations concernant la vitesse de virage au système d'assistance à guidage transversal (20),

    dans lequel
    les données d'entrée comprennent des données en essaim provenant d'un groupe de données en essaim (18) comportant des informations d'un capteur (26) d'un véhicule automobile en essaim (34) et des informations sur le type de véhicule du véhicule automobile en essaim (34), et une vitesse de virage à laquelle l'accélération transversale maximale est inférieure à une valeur seuil prédéfinie dans un laps de temps prédéfini est déterminée, et dans lequel les données en essaim comprennent des informations concernant une accélération transversale du véhicule automobile en essaim (34) et/ou un état de charge du véhicule automobile en essaim (34) et/ou une pression de pneus du véhicule automobile en essaim (34) et/ou un type de direction du véhicule automobile en essaim (34) et/ou sur le fait de savoir si un guidage transversal du véhicule automobile en essaim (34) était actif ou non, dans lequel une sélection de données en essaim est déterminée par l'unité de réglage (10) sur la base du véhicule automobile en lui-même.

9. Programme informatique comportant des moyens de code de programme afin de mettre en œuvre toutes les étapes d'un procédé selon la revendication précédente 8 lorsque le programme informatique est exécuté sur un ordinateur ou sur une unité de calcul correspondante.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3360744 A1
- DE 102010054077 A1